# EUROPEAN PATENT APPLICATION

(11) **EP 1 177 893 A1**
(43) Date of publication of application: **06.02.2002**
(21) Application number: 01118263.1
(22) Date of filing: 30.07.2001
(51) Int. Cl.: B32B 27/08, B32B 27/36, B32B 33/00

(54) **Laminate of liquid crystalline polymer**

(30) Priority: 31.07.2000 JP 2000230784
(71) Applicant: Sumitomo Chemical Company, Limited, Chuo-ku Osaka 541-8550 (JP)
(72) Inventor: Hidaka, Yasuaki, Tsukuba-shi, Ibaraki (JP); Yamaguchi, Takanari, Tsukuba-shi, Ibaraki (JP)
(74) Representative: Henkel, Feiler, Hänzel

(57) **Abstract**

Provided is a laminate comprising a first layer composed of a liquid crystalline polymer showing optical anisotropy in molten state and a second layer containing a saponified ethylene-vinylester copolymer. The laminate has high gas barrier property even under high humidity and used as a laminated film for packaging and a vessel.

## Description

### BACKGROUND OF THE INVENTION

### Field of the Invention

The present invention relates to a laminate having a liquid crystalline polymer layer showing optical anisotropy in molten state and a saponified ethylene-vinyl ester copolymer layer, which is excellent in gas barrier property and manifesting high gas barrier property even under high humidity. The present invention also relates to a laminated film for packaging and a vessel obtainable using said laminate.

### Description of the Related Art

Saponified materials of ethylene-vinyl ester copolymer (for example, an ethylene-vinyl alcohol copolymer) are commercially accepted widely as a resin having very high oxygen barrier property, and used in the form of a material laminated with various general films, or in the form of a multi-layer molded article with various general resins. However, oxygen barrier property of this resin is significantly influenced by humidity, and it is known, for example, that oxygen barrier property lowers remarkably under high humidity of over 70% RH. Therefore, there is a strong demand in market for a gas barrier film showing high oxygen barrier property even under high humidity.

On the other hand, a liquid crystalline polymer showing optical anisotropy in molten state, for example, a liquid crystal polyester, is called thermotropic liquid crystalline polymer generally, and is a polymer in which molecules are oriented in molten state by strong intermolecular force. This strong intermolecular force generates high performance, for example, high heat resistance, high gas (water vapor) barrier property, and so on.

A liquid crystal polyester has rigid-rod molecule unlike aromatic polyesters such as polyethylene terephthalate and polybutylene terephthalate and therefore does not have entanglement even under molten state, and the rigid-rod molecule chain is remarkably oriented along the flow direction. By these molecular motion, a liquid crystal polyester shows a behavior of steep decrease in viscosity even by slight shearing, and shows a behavior of steep decrease in viscosity by increase in temperature, leading to extreme low tension when the polyester was deformed in molten state. Consequently, it is very difficult to maintain the form of a liquid crystal polyester in molten state, and properties along mechanical and transverse direction are not easily balanced due to molecule orientation of the polyester, and in an extreme case, there is a tendency that the polymer is torn along the molecule orientation direction.

For improving oxygen barrier property of a conventional ethylene-vinyl alcohol copolymer under high humidity condition, there has been proposed a resin composition composed of an ethylene-vinyl alcohol copolymer, a liquid crystal polyester and a specific bisoxazolin-based compound (JP-A No. 9-302159), however, practically sufficient ability is not obtained yet.

### SUMMARY OF THE INVENTION

An object of the present invention is to provide a laminate having high gas barrier property even under high humidity and showing gas barrier property of the maximum level among molded articles obtained by using a resin, and a laminated film for packaging and a vessel obtained by using the laminate.

That is, the present invention relates to a laminate comprising a first layer composed of a liquid crystalline polymer showing optical anisotropy in molten state and a second layer containing a saponified ethylene-vinylester copolymer.

Further, the present invention relates to the above laminate, wherein the first layer and the second layer are laminated via an adhesive layer.

Furthermore, the present invention relates to a laminated film for packaging and a vessel obtainable using the above laminate.

### DETAILED DESCRIPTION OF THE INVENTION

The laminate of the present invention is characterized in that it comprises a first layer composed of a liquid crystalline polymer showing optical anisotropy in molten state and a second layer containing a saponified ethylene-vinylester copolymer.

When the gas permeation degrees under high humidity of the above-mentioned first layer, the above-mentioned second layer, and a laminate comprising the first layer and the second layer laminated with each other were measured respectively, it was observed that a value of the gas permeation degree of the laminate was far smaller than the value of the gas permeation degree calculated (theoretically) from the value of the first layer alone and that of the second layer alone.

Usually, the gas permeation degree of a laminate is calculated as the inverse number of the sum of the inverse numbers of the gas permeation degrees of layers constituting the laminate . However, in the laminate of the present invention, a gas permeation degree lower by far than such a theoretical value could be surprisingly manifested though the reason for this is not clear.

This effect is observed more remarkably by providing a layer composed of a liquid crystalline polymer on both surfaces of a layer composed of a saponified ethylene-vinylester copolymer.

In the laminate of the present invention, as a liquid crystalline polymer showing optical anisotropy in molten state contained in the first layer, there are listed, for example, whole aromatic or semi-aromatic polyesters, polyesterimides, polyesteramides and the like, and liquid crystalline resin compositions containing them, and the like.

From the standpoint of water vapor barrier property, as such a liquid crystalline polymer, a liquid crystal polyester not having imide bond or amide bond is preferable, and the composition containing a liquid crystal polyester as one component is also preferable. From the standpoints of molding processability and performances of the resulting film, a liquid crystal polyester resin composition containing a liquid crystal polyester (a-1) as a continuous phase and a copolymer(a-2) containing a functional group reactive with liquid crystal polyester as a dispersed phase is further preferable.

The above liquid crystal polyester (a-1) is a polyester called "thermotropic liquid crystalline polymer". More specifically, examples thereof include:
(1) those obtainable by reacting an aromatic dicarboxylic acid, an aromatic diol, and an aromatic hydroxycarboxyic acid;
(2) those obtainable by reacting different kinds of aromatic hydroxycarboxylic acids;
(3) those obtainable by reacting an aromatic dicarboxylic acid and a nuclear-substituted diol; and
(4) those obtainable by reacting a polyester such as polyethylene terephthalate and an aromatic hydroxycarboxylic acid; and preferably forms an anisotropic molten product at a temperature of 400°C or lower. Further, in place of the aromatic dicarboxylic acid, the aromatic diol, or the aromatic hydroxycarboxylic acid, ester derivatives thereof can be used.

Examples of repeating units of the above liquid crystal polyester (a-1) include the repeating units derived from aromatic dicarboxylic acid, repeating units derived from aromatic diol, and repeating units derived from aromatic hydroxycarboxylic acid, each represented by the following formulae, without being limited thereto.
Repeating unit derived from aromatic dicarboxylic acid : 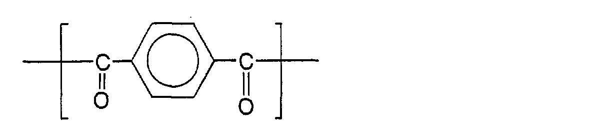 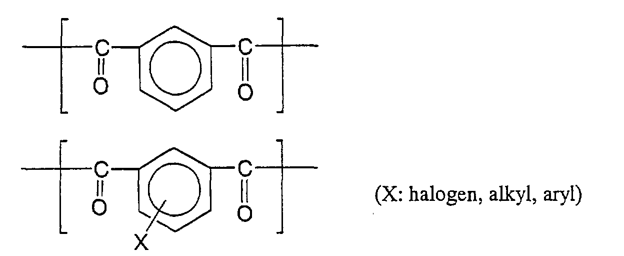 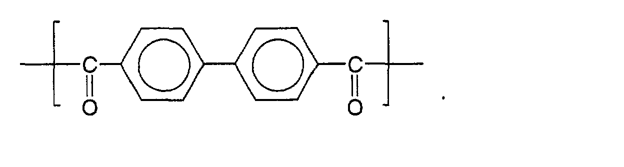 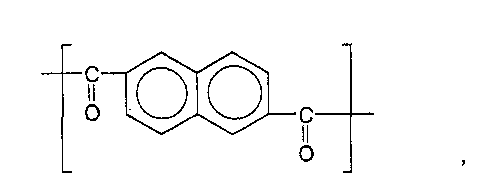 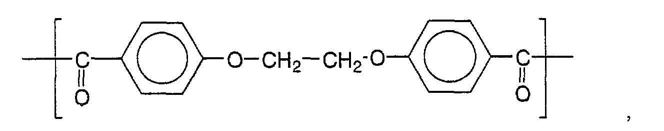 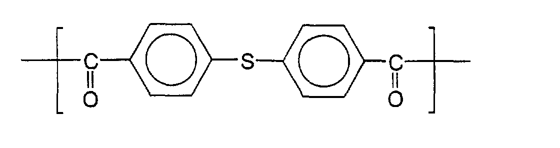 Repeating unit derived from an aromatic diol:

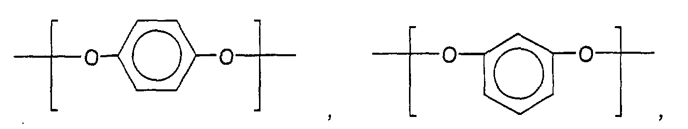

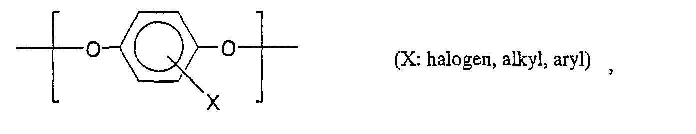

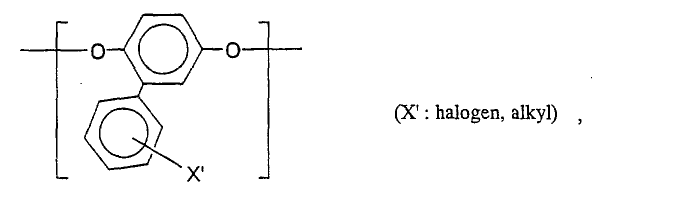

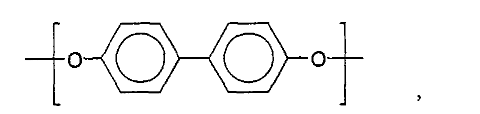

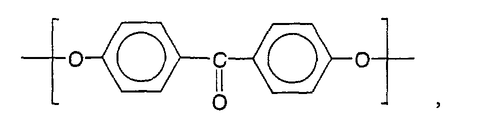

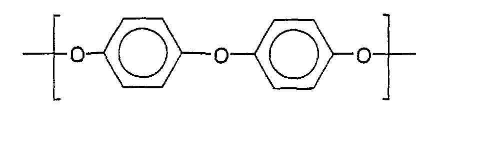

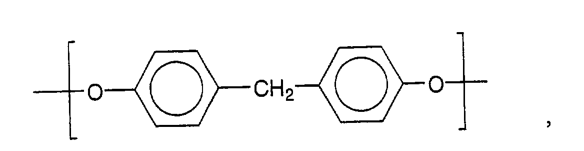

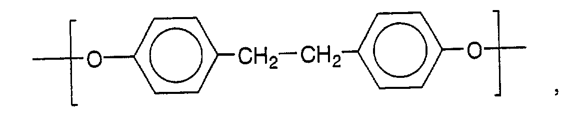

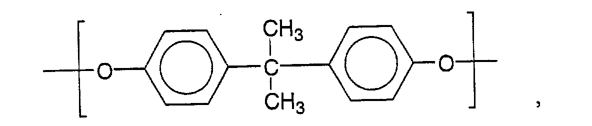

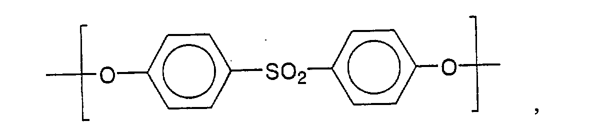

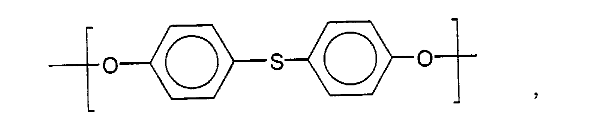

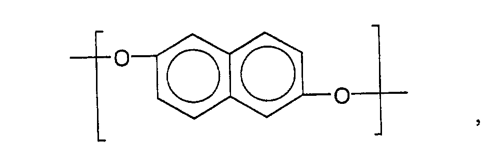

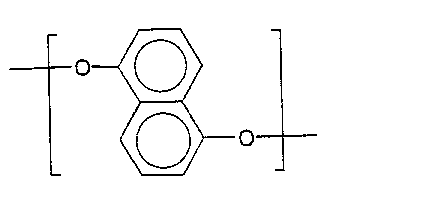

Repeating unit derived from an aromatic hydroxycarboxylic acid:

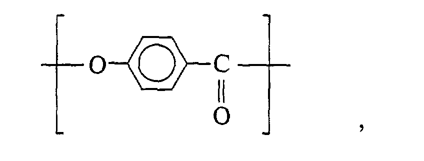

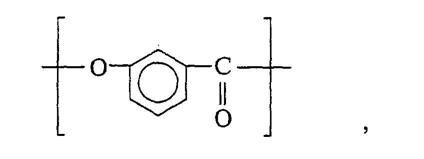

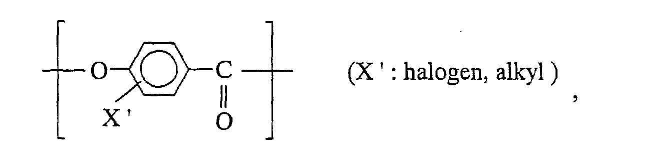

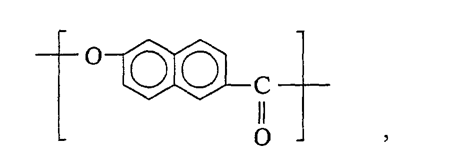

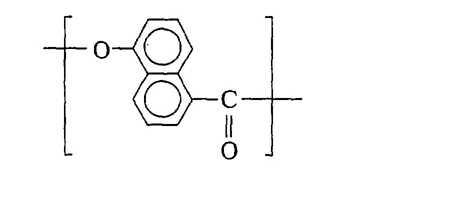

In the above formulas, X represents a halogen atom, an alkyl group having 1 to 12 carbon atoms or an aryl group having 6 to 24 carbon atoms. X' represents a halogen atom or an alkyl group having 1 to 12 carbon atoms.

As a suitable liquid crystal polyester (a-1) in view of the balance of heat resistance, mechanical properties, and processability, the liquid crystal polyesters including a following repeating unit are exemplified.

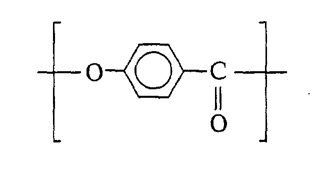

And as a liquid crystal polyester (a-1), those including at least 30 mole % of the repeating unit are further suitable. Specifically, combinations of the repeating units shown as the following (I) - (VI) are preferable.

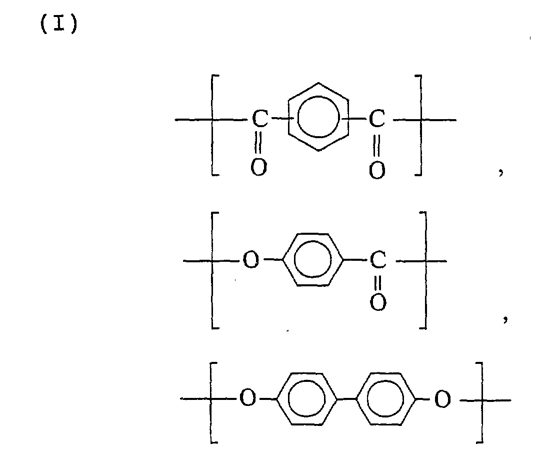

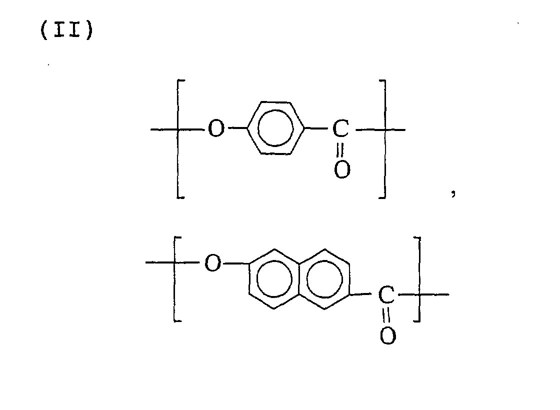

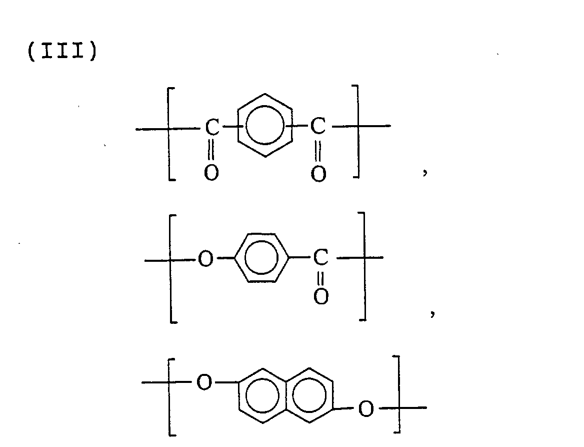

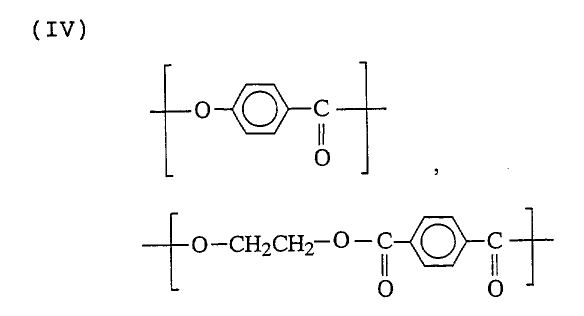

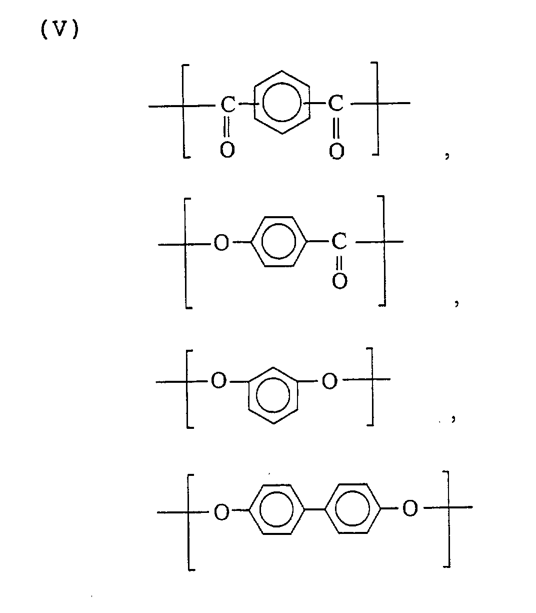

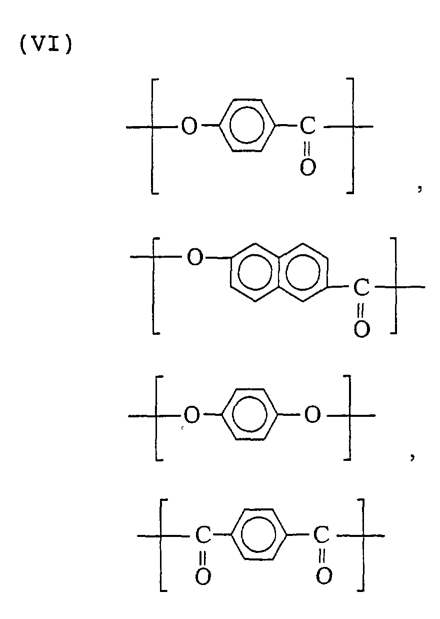

Among them, the combinations represented by (I), (II) and (IV) are preferable, and the combinations represented by (I) and (II) are more preferable.

Production method of the above liquid crystal polyesters (I) to (VI) are disclosed in JP-B- 47-47870, JP-B- 63-3888, JP-B- 63-3891, JP-B-56-18016, and JP-A-2-51523.

A liquid crystal polyester (a-1) comprising: 30-80 % by mole of repeating unit (a'); 0-10 % by mole of repeating unit (b'); 10-25 % by mole of repeating unit (c'); and 10-35 % by mole of repeating unit (d' ) ; is preferably used for the field where high heat resistance is required. 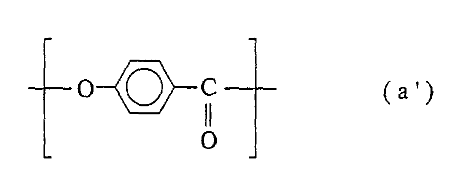 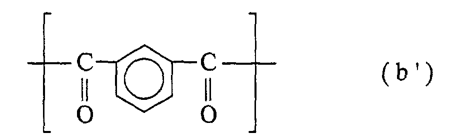 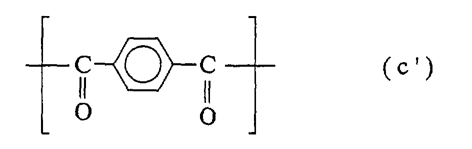 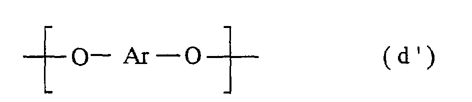 In the formula, Ar is a divalent aromatic group having 6 to 24 carbon atoms.

For laminate and vessel of the present invention, from standpoints such as an environmental problem, in the field required for easy abandonment, such as incineration after use, as the liquid crystal polyester (a-1), those constituted with the combination of elements of only carbon, hydrogen and oxygen are used preferably, among the suitable combinations required for each fields exemplified so far.

As the functional group reactive with liquid crystal polyester contained in a copolymer (a-1), any functional groups can be used as long as it has reactivity with a liquid crystal polyester. Exemplified are an oxazolyl group, an epoxy group, an amino group, etc., and preferably an epoxy group. The epoxy group etc. may exist as a part of other functional groups, and as such an example, a glycidyl group is exemplified.

The above copolymer (a-2) is suitably a copolymer having 0.1 to 30% by weight of an unsaturated glycidyl carboxylate unit and/or an unsaturated glycidyl ether unit.

Moreover, as the above copolymer (a-2) having a functional group reactive with liquid crystal polyester, in order to improve the flexibility of laminate, the Mooney viscosity is suitably 3-70, more suitably 3-30, and especially suitably 4-25. Here, Mooney viscosity means the value measured using 100 °C large rotor according to JIS K6300.

In the copolymer (a-2), as a method of introducing such a functional group into a copolymer, it is not limited especially and can be carry out by the well-known methods. For example, it is possible to introduce a monomer having this functional group by copolymerization in a preparation stage of the copolymer. It is also possible to conduct a graft copolymerization of a monomer having this functional group to a copolymer.

As the monomer having a functional group reactive with liquid crystal polyester, among them, as the monomer containing a glycidyl group, unsaturated glycidyl carboxylates and/or unsaturated glycidyl ethers are used suitably.

Unsaturated glycidyl carboxylate is a compound suitably represented by the following formula (α). 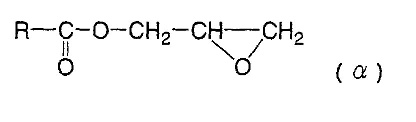 (In the formula, R is a hydrocarbon group of 2-13 carbons having an ethylenically unsaturated bond)

Unsaturated glycidyl ether is a compound suitably represented by the following formula (α') 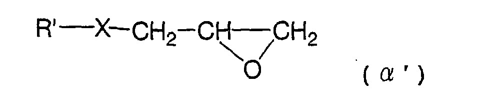 (In the formula, R' is a hydrocarbon group of 2-18 carbons having an ethylenically unsaturated bond, and X is a group represented by -CH₂-O- or

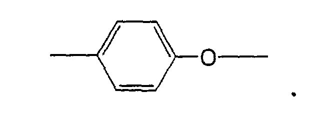

As unsaturated glycidyl carboxylate represented by the above formula (α), exemplified are: glycidylacrylate, glycidyl methacrylate, itaconic acid diglycidyl ester, butene tri carboxylic acid triglycidyl ester, and p-styrene glycidyl carboxylate.

As unsaturated glycidyl ether represented by the above formula (α'), exemplified are: vinyl glycidyl ether, allyl glycidyl ether, 2-methyl allyl glycidyl ether, methacryl glycidyl ether, and styrene-p-glycidyl ether.

The above copolymer (a-2) having a functional group reactive with liquid crystal polyester may be a thermoplastic resin as well as a rubber having the above functional group. Preferable is a rubber which can afford excellent heat stability and flexibility to a laminate of the present invention.

Here, the rubber corresponds to a polymeric substance having rubber elasticity at room temperature according to New Edition Polymer Dictionary (edited by Society of Polymer Science, Japan, 1988, Asakura Shoten). Concrete examples include, natural rubber, butadiene polymer, butadiene-styrene copolymer (random copolymer, block copolymer (including SEBS rubber, SBS rubber, etc.), graft copolymer, etc.), or hydrogenated products thereof, isoprene polymer, chloro butadiene polymer, butadiene-acrylonitrile copolymer, isobutylene polymer, isobutylene-butadiene copolymer rubber, isobutylene-isoprene copolymer, acrylate-ethylene copolymer rubber, ethylene-propylene copolymer rubber, ethylene-butene copolymer rubber, ethylene-propylene-styrene copolymer rubber, styrene-isoprene copolymer rubber, styrene-butylene copolymer, styrene-ethylene-propylene copolymer rubber, perfluoro rubber, fluororubber, chloroprene rubber, butyl rubber, silicone rubber, ethylene-propylene-non-conjugated diene copolymer rubber, thiol rubber, polyvulcanized rubber, polyurethane rubber, polyether rubber (e.g., polypropylene oxide etc.), epichlorohydrin rubber, polyester elastomer, polyamide elastomer, etc. Among them, acrylate-ethylene copolymer is used suitably and (meth) acrylate-ethylene copolymer rubber is still suitable.

These rubber-like substances can be prepared by any methods (for example, emulsion polymerization method, solution polymerization method, etc.) and any catalyst (for example, peroxide, trialkyl aluminium, lithium halide, nickel type catalyst, etc.).

Concrete examples of the copolymer (a-2) having a functional group reactive with liquid crystal polyester, as a rubber having epoxy group, include a copolymer rubber of (meth)acrylate-ethylene-(unsaturated glycidyl carboxylate and/or unsaturated glycidyl ether).

Here, the above (meth)acrylate is an ester obtained from an acrylic acid or methacrylic acid and an alcohol. As the alcohol, an alcohol having 1-8 carbons is preferable. Concrete examples of the (meth) acrylates include methyl acrylate, methyl methacrylate, n-butyl acrylate, n-butyl methacrylate, tert-butyl acrylate, tert-butyl methacrylate, 2-ethylhexyl acrylate, 2-ethylhexyl methacrylate, etc. The (meth)acrylates can be used alone or as a mixture of two or more therof.

In the above rubber having epoxy group, the (meth) acrylate unit is suitably more than 40 to less than 97% by weight, more suitably from 45% by weight to 70 % by weight, the ethylene unit is suitably from 3% by weight to less than 50% by weight, more suitably 10% by weight to 49 % by weight, and the unsaturated glycidyl ether unit and/or unsaturated glycidyl ether unit is suitably 0.1 to 30 % by weight, more suitably 0.5 to 20 % by weight.

As a method of introducing such a functional group such as an epoxy group reactive with a liquid crystal polyester, into the above rubber-like substance, it is not limited especially and can be carry out by the well-known methods. For example, it is possible to introduce a monomer having the functional group by copolymerization in a preparation stage of the rubber. It is also possible to conduct a graft copolymerization of a monomer having the functional group to a rubber.

The copolymer rubber can be prepared by usual methods, for example, bulk polymerization, emulsion polymerization, solution polymerization, etc. using a free radical initiator. Typical polymerization methods are those described in JP-A-48-11388, JP-A-61-127709, etc., and it can be prepared under the existence of a polymerization initiator which generates a free radical, at the pressure of more than 500 kg/cm², and the temperature of 40-300 °C.

Examples of other rubbers which can be used as copolymer (a-2) having a functional group reactive with liquid crystal polyester include, an acryl rubber the functional group, and a block copolymer rubber of vinyl aromatic hydrocarbon compound-conjugated diene compound having the functional group.

The acryl rubber here is suitably those having at least one monomer as a main component selected from the compound represented by the general formulas (1)-(3).

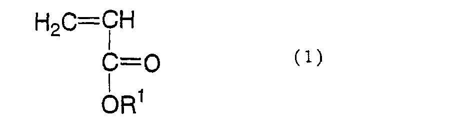

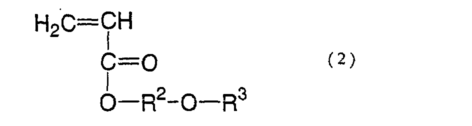

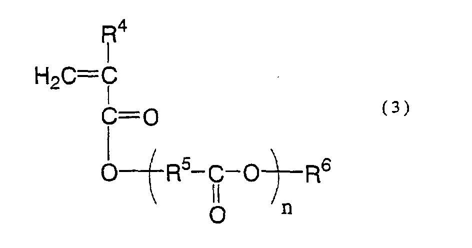

In the formula (1), R¹ is an alkyl group having 1-18 carbon atoms or a cyano alkyl group having 1-18 carbon atoms. In the formula (2), R² is an alkylene group having 1-12 carbon atoms, R³ is an alkyl group having 1-12 carbon atoms. In the general formula (3), R⁴ is a hydrogen atom or methyl group, R⁵ is an alkylene group having 3-30 carbon atoms, R⁶ is an alkyl group having 1-20 carbon atoms or derivative thereof, and n is an integer of 1-20.

Examples of the alkyl acrylate represented by the above general formula (1) include methyl acrylate, ethyl acrylate, propyl acrylate, butyl acrylate, pentyl acrylate, hexyl acrylate, octyl acrylate, 2-ethylhexyl acrylate, nonyl acrylate, decyl acrylate, dodecyl acrylate, cyanoethyl acrylate, etc.

Examples of the alkoxyalkyl acrylate represented by the above general formula (2) include methoxy ethyl acrylate, ethoxy ethyl acrylate, butoxy ethyl acrylate, ethoxy propyl acrylate, etc. These compounds represented by the above formulas (1) - (3) can be used alone or in combination of two or more, as a main component of the acryl rubber.

As a composition component of the acryl rubber, an unsaturated monomer which can be copolymerized with at least one monomer selected from the compounds represented by the above general formulas (1) - (3) can be used, according to requirements.

Examples of such unsaturated monomers include styrene, α-methyl styrene, acrylonitrile, halogenated styrene, methacrylonitrile, acryl amide, methacryl amide, vinyl naphthalene, N-methylol acrylamide, vinyl acetate, vinyl chloride, vinylidene chloride, benzyl acrylate, methacrylic acid, itaconic acid, fumaric acid, maleic acid, etc.

The suitable component ratio of the acryl rubber, in order to improve the moldability of the first layer or the impact strength of the resulting laminate is : 40.0 - 99.9 % by weight of one monomer selected at least from compounds represented by the above general formulas (1) - (3); 0.1 - 30.0% by weight of unsaturated glycidyl carboxylate and/or unsaturated glycidyl ether; 0.0 - 30.0 % by weight of one monomer which can be copolymerized with the unsaturated monomers selected at least from the compound represented by the above general formulas (1) - (3).

The preparation process of the acryl rubber is not especially limited, and well known polymerization method described, for example, in JP-A-59-113010, JP-A-62-64809, JP-A-3-160008, or WO 95/04764 can be used. It can be prepared under the existence of a radical initiator, by emulsion polymerization, suspension polymerization, solution polymerization, or the bulk polymerization.

Examples the block copolymer rubber of vinyl aromatic hydrocarbon compound-conjugated diene compound having the above functional group reactive with liquid crystal polyester include: a rubber which is obtained by epoxidization of a block copolymer comprising sequences mainly consisting of vinyl aromatic hydrocarbon compound, and sequences mainly consisting of conjugated diene compound; or a rubber which is obtained by epoxidization of a hydrogenated product of said block copolymer.

The block copolymer of vinyl aromatic hydrocarbon compound-conjugated diene compound or the hydrogenated product thereof can be prepared by the well-known methods, for example, as described in JP-B-40-23798, JP-A-59-133203, etc.

Examples of the aromatic hydrocarbon compound include, for example, styrene, vinyltoluene, divinylbenzene, α-methyl styrene, p-methyl styrene, vinyl naphthalene, etc. Among them, styrene is suitable. Examples of the conjugated diene compound include, for example, butadiene, isoprene, 1,3-pentadiene, 3-butyl-1,3-octadiene, etc. Butadiene and isoprene are suitable.

A rubber used as copolymer (a-2) having a functional group reactive with liquid crystal polyester may be vulcanized according to requirements, and it can be used as a vulcanized rubber. Vulcanization of the above copolymer rubber of (meth)acrylate-ethylene-(unsaturated glycidylcarboxylate and/or unsaturated glycidylether) is attained by using a polyfunctional organic carboxylic acid, a polyfunctional amine compound, an imidazole compound, etc., without being limited thereto.

As a copolymer (a-2) having a functional group reactive with liquid crystal polyester, examples of a thermoplastic resin having epoxy group include an epoxy group containing ethylene copolymer comprising: (a) 50 - 99 % by weight of ethylene unit, (b) 0.1 - 30 % by weight of unsaturated glycidylcarboxylate unit and/or unsaturated glycidylether unit, preferably 0.5 - 20 % by weight, and (c) 0 - 50 % by weight of ethylenically unsaturated ester compound unit

Examples of the ethylenically unsaturated ester compound (c) include vinyl ester of carboxylic acid and alkyl ester of α,β-unsaturated carboxylic acid, etc. such as : vinyl acetate, vinyl propionate, methyl acrylate, ethyl acrylate, butyl acrylate, methyl methacrylate, ethyl methacrylate, and butyl methacrylate. Vinyl acetate, methyl acrylate and ethyl acrylate are especially preferable.

Examples of the epoxy group containing ethylene copolymer include a copolymer comprising ethylene unit and glycidyl methacrylate unit, a copolymer comprising ethylene unit, glycidyl methacrylate unit and methyl acrylate unit, a copolymer comprising ethylene unit, glycidyl methacrylate unit and ethyl acrylate unit, and a copolymer comprising ethylene unit, glycidyl methacrylate unit and vinyl acetate unit etc.

Melt index (hereinafter referred to as MFR. JIS K7210, at 190 °C, 2.16kg load) of the epoxy group containing ethylene copolymer is suitably 0.5-100g/10 minutes, more preferably 2-50g / 10 minutes. Although melt index may be outside this range. When the melt index is more than 100g / 10 minutes, it is not preferable in respect to mechanical physical properties of the composition. When the melt index is less than 0.5 g / 10 minutes, compatibility of component (a-1) with a liquid crystal polyester is inferior and it is not preferable.

The epoxy group containing ethylene copolymer, in order to improve mechanical properties of the resulting laminate, has suitably a bending shear modulus of 10 - 1300 kg/cm², more suitably 20-1100kg/cm².

The epoxy group containing ethylene copolymer is manufactured by high pressure radical polymerization method of copolymerizing usually an unsaturated epoxy compound and ethylene, under existence of a radical generating agent, at a pressure of 500 to 4000 atm and at 100-300 °C, under existence or un-existing of a suitable solvent and a chain transfer agent. It is manufactured also by a method of conducting molten graft copolymerization in an extruder, mixing an unsaturated epoxy compound and a radical generating agent with polyethylene.

As the above-described liquid crystal polyester resin composition, a resin composition containing the above-mentioned liquid crystal polyester (a-1) as a continuous phase and the above-mentioned copolymer (a-2) containing a functional group reactive with liquid crystal polyester as a dispersed phase is preferable.

When the liquid crystal polyester (a-1) is not a continuous phase, the gas barrier property, heat resistance and the like of a film obtainable by using the liquid crystal polyester resin composition may decrease.

In such a liquid crystal polyester resin composition, it is believed that reactions occur between components of the composition, and the liquid crystal polyester (a-1) forms a continuous phase and simultaneously the copolymer (a-2) having a functional group reactive with liquid crystal polyester is finely dispersed, consequently, the molding property of the composition is improved and the abilities of the first layer obtained by using this composition are excellent, though detail of the mechanism is not clear.

One embodiment of the above-mentioned liquid crystal polyester resin composition is a resin composition containing (a-1) a liquid crystal polyester in an amount of 56.0 to 99.9% by weight, preferably 65.0 to 99.9% by weight, further preferably 70 to 98% by weight, and (a-2) a copolymer having a functional group reactive with liquid crystal polyester in an amount of 44.0 to 0.1% by weight, preferably 35.0 to 0.1% by weight, further preferably 30 to 2% by weight. When the amount of the liquid crystal polyester (a-1) is less than 56.0% by weight, the gas barrier property and heat resistance of the first layer may decrease, undesirably. When the amount of the liquid crystal polyester (a-1) is over 99.9% by weight, the molding processability of the composition may be spoiled , undesirably.

For preparation of the above-mentioned liquid crystal polyester resin composition, a method, for example, in which components of the composition are mixed in solution condition and a solvent is evaporated or the components are precipitated in a solvent is exemplified. From the industrial viewpoint, a method of kneading components in molten state is preferable. For melt-kneading, generally used kneading apparatuses such as single-screw or twin-screw extruders, various kneaders and the like can be used. Particularly, a twin-screw high kneader is preferable.

In melt-kneading, a preferable range of cylinder set temperature of a kneading apparatus differs depending on the kind of a liquid crystal polyester, and the temperature of a resin at a resin output part of the kneading apparatus is preferably set in a range in which the liquid crystal polyester (a-1) used manifests optical anisotropy and which is not more than 400°C. Specifically, the temperature of a resin at a resin output part of a kneading apparatus is preferably set so that it is not less than the flow temperature of a liquid crystal polyester used and not more than 400°C.
Here, the flow temperature means a temperature at which a melt viscosity of 48000 poise is shown when a resin heated at a temperature raising rate of 4°C/min. using a high pressure type flow tester CFT-500 type manufactured by Shimadzu Corp. is extruded through a nozzle having an internal diameter of 1 mm and a length of 10 mm under a load of 100 kgf/cm².

In kneading, components may also be uniformly mixed previously by an apparatus such as a tumbler mixer or a Henschel mixer, and if necessary, a method in which mixing is omitted and components are separately fed in quantitative amounts respectively into a kneading apparatus may also be used.

In the laminate of the present invention, the first layer may contain an inorganic filler, if necessary, and for example, it may be formed by compounding an inorganic filler in the above-mentioned liquid crystal polyester resin composition. As such an inorganic filler, for example, calcium carbonate, talk, clay, silica, magnesium carbonate, barium sulfate, titanium oxide, alumina, gypsum, glass flake, glass fiber, carbon fiber, alumina fiber, silica alumina fiber, aluminum borate whisker, potassium titanate and the like are exemplified.

Further, in forming the first layer, if necessary, various additives such as organic fillers, heat stabilizers, optical stabilizers, flame retardants, lubricants, inorganic or organic coloring agents, cross-linking agents, foaming agents, fluorescents, surface smoothing agents, surface gloss improving agents, releasing improving agents like a fluorine resin, and the like can also be added during a production process or in the subsequent working process. The amount of these fillers is setting up preferably not to spoil the formation of a continuous phase of the liquid crystal polyester in the resin composition.

In the laminate of the present invention, as the first layer, for example, a film obtained by using the above-mentioned liquid crystal polyester resin composition can be adopted.

Such a film can also be obtained by, for example, a press molding method in which heat molding is conducted by a press, a cast molding method in which a material is dissolved in solvent and cast, then, the solvent is removed to obtain a film, a T die method in which a melted resin is extruded through a T die and wound up, an inflation process in which a molten resin is extruded in the form of a cylinder from an extruder having an annular die placed, the extruded resin is blown up, cooled and wound up, a method in which a sheet obtained by an injection molding method of the above-mentioned methods is further uniaxially drawn or biaxially drawn, or other methods.

In the T die method, a uniaxially drawn film obtained by winding a melted resin extruded from a T die while drawing the resin along the winding machine direction (machine direction), or a biaxially drawn film obtained by winding the melted resin while drawing the resin along the machine direction and a direction vertical to the machine direction (transverse direction), can be produced.

The slit interval of a T die in the T die method is preferably from 0.2 to 2.0 mm, further preferably from 0.2 to 1.2 mm.

The draft ratio of a uniaxially drawn film is preferably from 1.1 to 45, further preferably from 10 to 40, particularly preferably from 15 to 35.

Here, the draft ratio is a value obtained by dividing the sectional area of a T die slit by the film sectional area of a vertical to the machine direction. When the draft ratio is less than 1.1, the strength of a film is insufficient, and when the draft ratio is over 45, the surface smoothness of a film may be insufficient, undesirably. The draft ratio can be set by controlling setting condition of an extruder, winding speed and the like.

The biaxially drawn film is obtained by a method in which a liquid crystalline polymer is melt-extruded using the same T die as in film formation of a uniaxially drawn film, and the sheet extruded from the T die is drawn along the machine direction and transverse direction simultaneously (simultaneous biaxial drawing method), a method in which the sheet extruded from the T die is first drawn along the machine direction, then, this drawn sheet is drawn along the transverse direction by a tenter under a high temperature from 200 to 400°C in the same process (sequential biaxial drawing method), or the like.

In obtaining the biaxially drawn film, the drawing ratio thereof is preferably 1.2 to 20-fold along the machine direction and 1.2 to 20-fold along the transverse direction. When the drawing ratio is out of the above-mentioned range , the resulting film may have insufficient strength, or obtaining a film having uniform thickness may be difficult, undesirably.

An inflation film obtained by film formation of a cylindrical sheet extruded from a annular slit of a inflation die by an inflation process, and the like are also preferably used.

In the inflation process, a liquid crystalline polymer is fed to a melt extruder equipped with a die having an annular slit, and a molten resin is extruded toward upper direction or lower direction through the annular slit of the die equipped to the extruder. The annular slit interval(gap) is usually from 0.1 to 5 mm, preferably from 0.2 to 2 mm, and the diameter of the annular slit is usually from 20 to 1000 mm, preferably from 25 to 600 mm. A film can be expanded and drawn along the transverse direction (TD) vertical to the machine direction by drawing a melted resin film melt-extruded along the machine direction (MD) and simultaneously by blowing air or an inert gas, for example, a nitrogen gas and the like into this cylindrical film.

In the inflation process, the preferable blowing ratio is from 1.5 to 10, the preferable MD drawing magnification is from 1.5 to 50. Here, the blowing ratio means a value obtained by dividing the diameter of a melted resin after putting out from a die orifice and expanded by the diameter of an annual slit of the die. Further, the MD drawing magnification means a value obtained by dividing the pulling speed by the resin output speed(rate) from a die.

If the setting condition in inflation process is out of the above-mentioned range, obtaining a film of a liquid crystal polyester resin composition having uniform thickness, no wrinkle and high strength may be difficult, undesirably.

The expanded film is usually, after air cooling or water cooling of the peripheral part, passed through a nip roll and pulled.

In inflation film formation, such conditions that a cylindrical (molten) film is expanded into a form having uniform thickness and smooth surface can be selected depending on the composition of a liquid crystal polyester resin composition.

The thickness of the above-mentioned first layer is not particularly restricted, and when used as a laminated film for packaging, it is preferably from 1 µm to 20 µm, further preferably from 3 µm to 15 µm. When the thickness of the first layer is less than 1 µm, effects such as gas barrier property and the like of a liquid crystalline polymer layer in the laminated film may be insufficient, and when over 20 µm, flexibility decreases, pinholes and the like occur in the first layer in bending of the resulting laminated film, resulting in decrease in gas barrier property, undesirably.

Further, when used as a vessel by multi-layer molding, the thickness of the above-mentioned first layer is preferably from 1 µm to 10 mm, further preferably from 3 µm to 2 mm. When this thickness is less than 1 µm, effects such as gas barrier property and the like of a liquid crystalline polymer layer in the multi-layer molded vessel may be insufficient, and when over 10 mm, molding property in multi-layer molding may decrease, undesirably.

The preferable range of the set temperature of a cylinder of an extruder in the above-mentioned T die method and inflation process differs depending on the kind of a liquid crystal polyester, and the temperature of a resin at a resin output part of the extruder is preferably set in a range in which the liquid crystal polyester used manifests optical anisotropy and which is not more than 400°C. Specifically, the temperature of a resin at a resin output part of an extruder is preferably set so that it is not less than the flow () temperature of a liquid crystal polyester used and not more than 400°C.

In the laminate of the present invention, in a saponified ethylene-vinylester copolymer (hereinafter, abbreviated as EVOH in some cases) contained in a second layer, a vinyl acetate monomer unit is preferably used as a vinyl ester monomer unit.

It is preferable that EVOH has a saponification ratio of a vinyl ester monomer unit of 80% or more. When less than 80%, gas barrier property and heat stability may be spoiled .

Regarding the composition ratio of ethylene and vinyl ester, EVOH preferably contains an ethylene unit in an amount of 20 to 60 mol%. When the content of an ethylene unit is less than 20 mol%, the melt molding property of a polymer composition may be poor, on the other hand, when over 60 mol%, gas barrier property may be spoiled .

EVOH may have a unit derived from other copolymerizable monomer in a proportion which does not disturb the object of the present invention (generally, in a proportion of 10 mol% or less ) , and examples of such a monomer include poly-functional (meth)acrylic compounds such as triallyl cyanurate, triallyl isocyanurate, diallyl maleate, diallyl fumarate, diallyl phthalate, trimethylolpropane tri(meth)acrylate, tetraethylene glycol diacrylate and the like. A poly-functional monomer can be copolymerized in EVOH, in any form such as a usual copolymer or graft polymer and the like. When a poly-functional monomer is copolymerized, the proportion thereof is preferably from about 0.002 to 0.2 mol%.

In the laminate of the present invention, it may be advantageous that a second layer is provided on one surface of the above-mentioned first layer, and it is further preferable that the first layer is provided on both surfaces of the second layer. It may also be advantageous that a third layer such as a thermoplastic resin layer and the like for protecting the first layer is laminated on other surface of the first layer.

Further, it may be advantageous that the above-mentioned second layer contains a saponified ethylene-vinyl ester copolymer, and additionally, a thermoplastic resin may also be contained. Furthermore, it may be advantageous that the above-mentioned second layer contains a layer composed of a saponified ethylene-vinyl ester copolymer, and additionally, a layer composed of a thermoplastic resin may also be contained.

As the thermoplastic resin which can be used in such second layer and third layer, for example, polyolefin, ethylene-vinyl acetate copolymer, ethylene-vinyl alcohol copolymer, ionomer, ethylene-acrylic acid copolymer, ethylene-methyl methacrylate copolymer, ethylene-methacrylic acid copolymer, ethylene-methyl acrylate copolymer, ethylene-ethyl acrylate copolymer, adhesive polyolefin, polyacrylonitrile, polyamide, polyester, fluorine resin, polyurethane, polystyrene, polycarbonate, polyacetal, polyphenylene ether, polyether sulfone, polyvinyl chloride, polyvinylidene chloride, polyphenylene sulfide, acrylic resin and the like are listed. Preferable examples thereof include, but not limited to, polyethylene, polypropylene, polyethylene terephthalate, polyethylene naphthalate, polyamide, polyvinyl alcohol, ethylene-vinyl alcohol copolymer, polystyrene, ionomer, polyvinyl chloride and the like.

Here, polyethylene is an ethylene-based polymer having a crystal structure of polyethylene, and for example, it contains also copolymer of ethylene with other monomers , and specifically, copolymers of ethylene with α-olefins, referred to as linear low density polyethylene (LLDPE) and the like are contained. Further, polypropylene is a propylene-based polymer having a crystal structure of polypropylene, and it contains generally used propylene-based block copolymers, random copolymers and the like (these are copolymers of with ethylene, 1-butene and the like).

In the laminate of the present invention, a first layer composed of a liquid crystalline polymer showing optical anisotropy in molten state and a second layer containing an ethylene-vinyl ester copolymer-saponified material may also be laminated via no adhesive. Specifically, there are listed a laminate obtained by thermal crimping of a first layer and a second layer, for example, a laminate obtained by melt-lamination of a second layer onto a first layer, a laminate obtained by melt-extrusion of a first layer and a second layer simultaneously, and the like.

In the laminate of the present invention, it is preferable that a first layer and a second layer are laminated via an adhesive layer.

Such an embodiment can be realized, for example, by a dry lamination method in which an adhesive forming an adhesive layer is applied in the form of a solution on the surface of a second layer, a solvent is evaporated, then, a first layer is pasted; an extrusion (melt) lamination method in which a resin having adhesive function is extruded through a T die in melted condition, and sandwiched between a first layer and a second layer and pasted; a co-extrusion lamination method in which a raw material of a first layer and a raw material of a second layer are put into an extruder equipped with an annular die or a T die, and a multi-layer structure is formed in melted condition; and other methods.

In the laminate of the present invention, as the adhesive for adhering materials such as a first layer, second layer and the like, those having adhesion to the materials may be permissible, and for example, urea resin-based adhesives, melamine resin-based adhesives, phenol resin-based adhesives, vinyl acetate resin-based solvent type adhesives, synthetic rubber-based solvent type adhesives, natural rubber-based solvent type adhesives, vinyl acetate resin-based emulsion type adhesives, vinyl acetate copolymer resin-based emulsion type adhesives, EVA resin-based emulsion type adhesives, acrylic resin-based emulsion type adhesives, aqueous polymer-isocyanate-based adhesives, synthetic rubber-based latex type adhesives, EVA resin-based hot melt type adhesives, anhydrous maleate group-containing polyolefin-based hot melt type adhesives, epoxy-based adhesives, cyano acrylate-based adhesives, polyurethane-based adhesives, acrylic resin-based adhesives, acrylic resin-based pressure-sensitive type adhesives, rubber-based pressure-sensitive type adhesives, silicone-based adhesives and the like are listed. Preferable examples thereof include, but not limited to, polyurethane-based adhesives, epoxy-based adhesives, anhydrous maleate group-containing polyolefin-based hot melt type adhesive, silicone-based adhesive, and the like.

Particularly, as the adhesive forming the above-mentioned adhesive layer, polyurethane-based adhesives and/or epoxy-based adhesives and the like are preferably listed.

In the laminate of the present invention, surface treatment for further reinforcing adhesion and the like can be performed on the surface of a first layer and the surface of a second layer, and the like.

Examples of the surface treatment include, but not limited to, corona discharge treatment, plasma treatment, flame treatment, sand blast treatment, ultraviolet ray treatment, infrared treatment, sputtering treatment, solvent treatment, abrasion treatment and the like.

In the laminate of the present invention, it is possible that an adhesive showing excellent adhesion to a first layer is provided on the surface of the first layer, an adhesive showing excellent adhesion to a second layer is provided on the surface of the second layer, and these adhesive layers are adhered to laminate the first layer and the second layer. Further, it is possible that a third adhesive layer showing excellent adhesion to these adhesive layers is allowed to exist between them and the first layer and the second layer are laminated.

As the adhesive used in these two or three adhesive layers , urea resin-based adhesives, melamine resin-based adhesives, phenol resin-based adhesives, vinyl acetate resin-based solvent type adhesives, synthetic rubber-based solvent type adhesives, natural rubber-based solvent type adhesives, vinyl acetate resin-based emulsion type adhesives, vinyl acetate copolymer resin-based emulsion type adhesives, EVA resin-based emulsion type adhesives, acrylic resin-based emulsion type adhesives, aqueous polymer-isocyanate-based adhesives, synthetic rubber-based latex type adhesives, EVA resin-based hot melt type adhesives, anhydrous maleate group-containing polyolefin-based hot melt type adhesives, epoxy-based adhesives, cyano acrylate-based adhesives, polyurethane-based adhesives, acrylic resin-based adhesives, acrylic resin-based pressure-sensitive type adhesives, rubber-based pressure-sensitive type adhesives, silicone-based adhesives and the like are listed, as described above, and preferably, polyurethane-based adhesives, epoxy resin-based adhesives, anhydrous maleate group-containing polyolefin-based hot melt type adhesives, and silicone-based adhesives are listed. As a method of lamination of these adhesive layer, known methods can be used like in the above-mentioned case.

The laminated film for packaging of the present invention is characterized in that it is obtainable using the above-mentioned laminate of the present invention, and it is preferable that the thickness of a first layer composed of a liquid crystalline polymer showing optical anisotropy in molten state is 1 µm to 20 µm.

The vessel of the present invention is a vessel obtained by using the above-mentioned laminate of the present invention and it is preferable that the thickness of a first layer composed of a liquid crystalline polymer showing optical anisotropy in molten state is 1 µm to 10 mm, and this vessel can be formed by a known molding method.

In the laminate used in the laminated film as the packaging or in the vessel of the present invention, various additives can be added, if necessary, such as, for example, a ultraviolet absorber, antioxidant, plasticizer, inorganic or organic filler, heat stabilizer, optical stabilizer, flame retardant, lubricant, inorganic or organic coloring agent, cross-linking agent, foaming agent, fluorescent, surface smoothing agent, surface gloss improving agent, releasing improving agent typified by a fluorine resin, and the like.

The form of the packaging and the vessel of the present invention is not particularly restricted, and there are preferably listed bag, standing pouch, bag-in-drum and the like for the packaging, and retort vessel, deep drawn vessel, cart can and the like for the vessel. Further specifically, forms such as three-side sealed wrapping bag, four-side sealed wrapping bag, pyrrole wrapping bag, wrapping bag having gazette, standing pouch and the like are listed as the packaging. The bag formation method is not particularly restricted, and can be conducted by a known method using various commercially available bag production machines.

The content of the packaging and the vessel of the present invention is not particularly restricted, and when humidity is going to be kept or an aroma component is going to be maintained, the packaging and the vessel is suitably used for contents requiring prevention of oxidation. For example, it is suitably used for dry materials such as dried skipjack, dried seaweed and the like, foods such as cooked curry, pickles and the like, favorite products such as perfume, tobacco and the like, dye and fats and oils, resins and the like.

### EXAMPLES

The following production examples, examples and comparative examples illustrate the present invention, but they do not limit the scope of the present invention.

### Production Example 1

### Production of liquid crystal polyester (a-1)

16.6 kg (12.1 mol) of p-hydroxybenzoic acid, 8.4 kg (4.5 mol) of 6-hydroxy-2-naphthoic acid and 18.6 kg (18.2 mol) of acetic anhydride were charged in a polymerization tank equipped with a comb type stirring blade, they were heated under a nitrogen gas atmosphere while stirring, and polymerized at 320°C for 1 hour, then, further polymerized at 320°C for 1 hour under a reduced pressure of 2,0 torr. During this operation, acetic acid by-produced was distilled out of the system continuously. Then, the system was gradually cooled, and the resulted polymer was removed out of the system at 180°C.

The resulted polymer was ground by a hammer mill manufactured by Hosokawa Micron K.K., to obtain particles of 2.5 mm or less. The particles were further treated at 240°C under a nitrogen gas atmosphere for 5 hours in a rotary kiln, to obtain a whole aromatic polyester in the form of a particle having a flow temperature of 270°C, composed of the following repeating units.

Here, the flow temperature means a temperature at which a melt viscosity of 48000 poise is shown when a resin heated at a temperature raising rate of 4°C/min. using a high pressure type flow tester CFT-500 type manufactured by Shimadzu Corp. is extruded through a nozzle having an internal diameter of 1 mm and a length of 10 mm under a load of 100 kgf/cm².

Hereinafter, the resulted whole aromatic polyester is abbreviated as (a-1). This sample was observed under a polarization microscope (crossed Nicol) to find optical anisotropy at 280°C or more under cover glass pressure, teaching it was a liquid crystalline polymer.

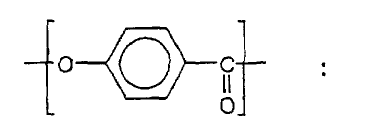

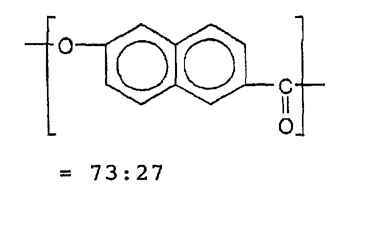

### Production Example 2

### Production of (a-2) copolymer (rubber) containing functional group reactive with liquid crystal polyester

Rubber having a methyl acrylate/ethylene/glycidyl methacrylate ratio of 59.0/38.7/2.3 (ratio by weight), a mooney viscosity of 15, and a crystal melting calorie of less than 1 J/g was obtained according to a method described in JP-A No. 61-127709, Example 5. Hereinafter, this rubber is abbreviated as (a-2).

Here, the mooney viscosity was measured using a large rotor at 100°C according to JIS K6300. The crystal melting calorie was measured by heating the sample from -150°C to 100°C at 20°C/min. using DSC.

### Production Example 3

### Production of film forming first layer

(a-1) produced in Production Example 1 and (a-2) produced in Production Example 2 were mixed by a Henschel mixer so that the proportions thereof were 96.5% by weight and 3.5% by weight, respectively. Then, the mixture was melt-kneaded by using TEX-30 type twin screw extruder manufactured by The Japan Steel Works, Ltd. at a cylinder set temperature of 340°C and a screw rotation of 200 rpm to obtain pellets. The resulted pellet showed optical anisotropy at 280°C or more under pressure. The pellet had a flow initiation temperature of 260°C.

Then, the resulted pellet was fed to a single screw extruder of 60 mmφ equipped with a cylindrical die, and melt-kneaded at a cylinder set temperature of 280°C and a screw rotation of 60 rpm, and the meted resin was extruded toward upper direction through the cylindrical die having a diameter of 70 mm a lip distance of 1.0 mm and a die set temperature of 280°C, and in this operation, dry air was forced into a hollow part of this cylindrical film to expand the cylindrical film, subsequently the resin was cooled, then, pulled through a nip roll, to obtain a film containing a liquid crystalline polymer as a first layer.

In this case, a film obtained at a drawing magnification (pulling speed/resin output speed(rate) from cylindrical die) along MD direction of 38.7 and a blowing ratio (diameter of cylindrical film expanded/diameter of die) of 3.8 had a thickness of 7 µm. Hereinafter, this film is abbreviated as A-1.

### Examples 1 to 20, Comparative Examples 1 to 4 and Reference Examples 1 to 20

A-1 produced in Production Example 3 was used as a material of a first layer. Ethylene-vinyl alcohol copolymers of trade name "Eval VR15" , "Eval F20" , "Eval E20" , "Eval XL12" (all manufactured by Kuraray Co., Ltd., each attached numerals means thickness (unit; µm)), a nylon (Ny) film (thickness: 15 µ m) having trade name "Harden N1102" (manufactured by Toyobo Co., Ltd.), a PET film (thickness: 12 µm) having trade name "E5102" (manufactured by Toyobo Co., Ltd.), and a LLDPE film (thickness: 85 µm) having trade name "Aromer U" (manufactured by Tamapoly K.K.) were used as a material of a second layer, and laminates were produced using a known dry lamination method.

Namely, an adhesive solution was applied on a substrate by a bar coater, a solvent was evaporated, then, this substrate was pasted with a match substrate, they were heat roll-pressed at 80°C, then, aged for 48 hours at 40°C to obtain a laminate. The structure of the laminate is shown in Table 1. Number in brackets in Table 1 shows the thickness of each layer, and "/" means an adhesive layer.

For adhering of each substrate in Examples 1 to 20 and Comparative Examples 1 to 4, an adhesive obtained by mixing polyurethane-based adhesives manufactured by Takeda Chemical Industries, LTd., trade name A385 (main agent) and A50 (hardening agent) at a proportion of 6:1 was used. The thickness of these adhesive layer was 3 µm under dried condition.

The laminates manufactured were subjected to the following measurements. The results are shown in Table 1. As reference examples, materials constituting the laminates were subjected to the same measurements and the results are shown in Table 2.

### Measurement of oxygen transmission ratio (OTR)

OTR was measured according to JIS K7126, using an oxygen transmission rate measuring apparatus (OX-TRAN10/50A, manufactured by MOCON), using a test gas 99.99% oxygen and a carrier gas composed of 98% of nitrogen and 2% of hydrogen, at a temperature of 23°C. The unit is cc/m² · 24 hr · atm.

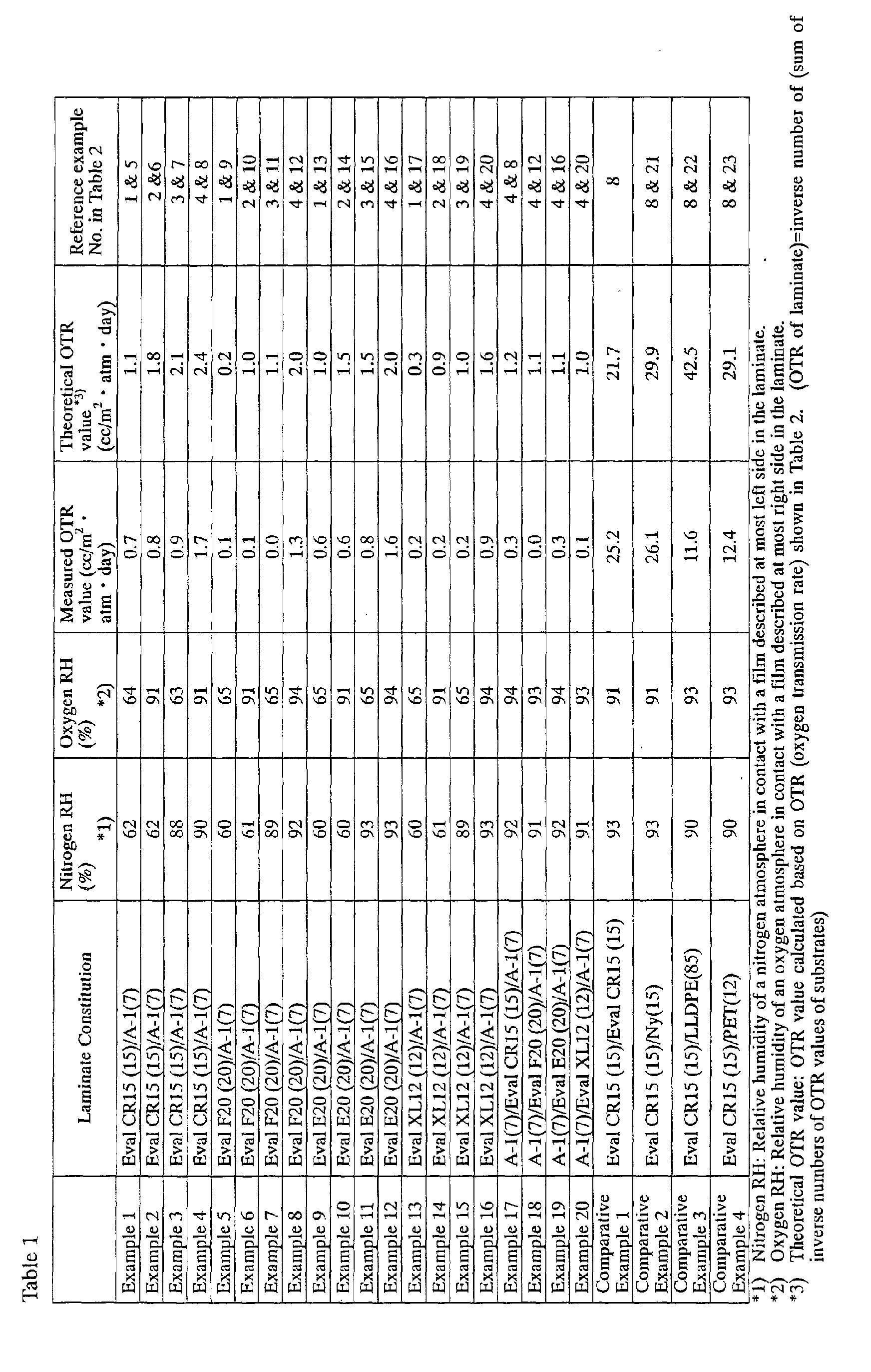

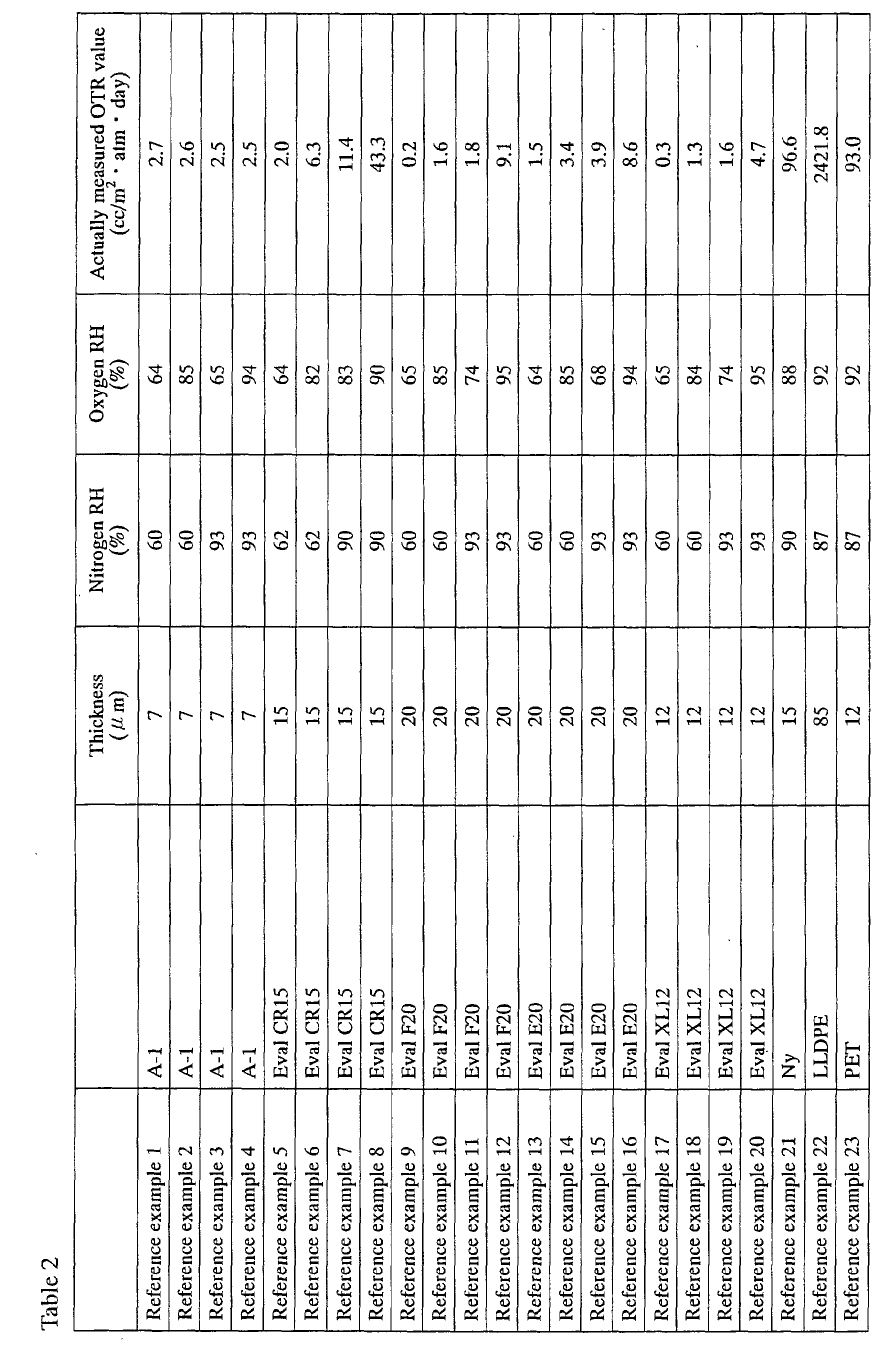

The laminate of the present invention is excellent in high gas barrier property and the like typified by oxygen barrier property even under high humidity, since the laminate has a first layer composed of a liquid crystalline polymer layer and a second layer containing an ethylene-vinyl ester copolymer-saponified material layer. Further, the laminate film as a wrapping material and vessel of the present invention are obtained by using this laminate, they are excellent in high gas barrier property and the like even under high humidity, and uses of wider range in the industry are expected.

## Claims

1. A laminate comprising a first layer composed of a liquid crystalline polymer showing optical anisotropy in molten state, and a second layer containing a saponified ethylene-vinylester copolymer.

2. The laminate according to Claim 1 wherein the saponified ethylene-vinylester copolymer is an ethylene-vinyl alcohol copolymer.

3. The laminate according to Claim 1 or 2 wherein two pieces of the first layer are provided on both surfaces of the second layer.

4. The laminate according to any of Claims 1 to 3 wherein the second layer is provided on one surface of the first layer, and a third layer protecting the first layer is provided on other surface of the first layer.

5. The laminate according to any of Claims 1 to 4 wherein the first layer and the second layer is laminated via an adhesive layer.

6. The laminate according to Claim 5 wherein the adhesive layer is formed of a polyurethane-based adhesive and/or an epoxy-based adhesive.

7. The laminate according to any of Claims 1 to 4 wherein the first layer and the second layer are laminated via no adhesive.

8. The laminate according to any of Claims 1 to 7 wherein the first layer composed of a liquid crystalline polymer showing optical anisotropy in molten state is formed of a liquid crystal polyester resin composition containing a liquid crystal polyester(a-1) as a continuous phase and a copolymer(a-2) containing a functional group reactive with liquid crystal polyester as a dispersed phase.

9. The laminate according to Claim 8 wherein the liquid crystal polyester resin composition is a composition obtained by melt-kneading a material comprising 56.0 to 99.9% by weight of the liquid crystal polyester (a-1) and 44.0 to 0.1% by weight of the copolymer (a-2).

10. The laminate according to Claim 8 or 9 wherein said functional group in the copolymer (a-2) is at least one group selected from the group consisting of an oxazolyl group, epoxy group and amino group.

11. The laminate according to any of Claims 8 to 10 wherein the copolymer (a-2) contains an unsaturated glycidyl carboxylate unit and/or an unsaturated glycidyl ether unit in an amount of 0.1 to 30% by weight.

12. The laminate according to any of Claims 8 to 10 wherein the copolymer (a-2) is a rubber and/or thermoplastic resin having an epoxy group.

13. The laminate according to any of Claims 8 to 12 wherein the liquid crystal polyester (a-1) is obtained by reacting an aromatic dicarboxylic acid, an aromatic diol and an aromatic hydroxycarboxylic acid.

14. The laminate according to any of Claims 8 to 12 wherein the liquid crystal polyester (a-1) is obtained by reacting two or more aromatic hydroxycarboxylic acids.

15. The laminate according to any of Claims 1 to 14 wherein the first layer is obtained by an inflation(blown) film formation method.

16. A laminated film for packaging obtainable using the laminate of any of Claims 1 to 15.

17. The laminated film for packaging according to Claim 16, wherein the first layer has a thickness of 1 µm to 20 µm.

18. A vessel obtainable using the laminate of any of Claims 1 to 15.

19. The vessel according to Claim 18 wherein the first layer has a thickness of 1 µm to 10 mm.
